(19) Europäisches Patentamt
European Patent Office
Office européen des brevets

(11) EP 4 350 617 B1

(12) EUROPEAN PATENT SPECIFICATION

(45) Date of publication and mention of the grant of the patent:
**26.08.2026 Bulletin 2026/35**

(21) Application number: **22845355.1**

(22) Date of filing: **20.07.2022**

(51) International Patent Classification (IPC):
***G06T 7/00*** *(2017.01)* ***G06F 18/00*** *(2023.01)*
***G06N 3/04*** *(2023.01)* ***G06T 7/13*** *(2017.01)*
***G06N 3/045*** *(2023.01)* ***G06V 10/44*** *(2022.01)*
***G06V 10/56*** *(2022.01)* ***G06V 10/764*** *(2022.01)*
***G06V 10/774*** *(2022.01)* ***G06V 10/778*** *(2022.01)*
***G06V 10/80*** *(2022.01)* ***G06V 10/82*** *(2022.01)*

(52) Cooperative Patent Classification (CPC):
**G06N 3/045; G06T 7/0012; G06T 7/13; G06V 10/44; G06V 10/56; G06V 10/764; G06V 10/774; G06V 10/778; G06V 10/806; G06V 10/82;** G06T 2207/10068; G06T 2207/20081; G06T 2207/20084; G06T 2207/30032; G06V 2201/032

(86) International application number:
**PCT/CN2022/106764**

(87) International publication number:
**WO 2023/001190 (26.01.2023 Gazette 2023/04)**

(54) **COLORECTAL POLYP IMAGE RECOGNITION METHOD, APPARATUS, AND STORAGE MEDIUM**

VERFAHREN, VORRICHTUNG UND SPEICHERMEDIUM ZUR ERKENNUNG KOLOREKTALER POLYP-BILDER

PROCÉDÉ DE RECONNAISSANCE D'IMAGE DE POLYPE COLORECTAL, APPAREIL ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2021 CN 202110833639**

(43) Date of publication of application:
**10.04.2024 Bulletin 2024/15**

(73) Proprietor: **Tianjin Yujin Artificial Intelligence Medical Technology Co., Ltd**
**Tianjin 300457 (CN)**

(72) Inventors:
- **LI, Jiaxin**
  **Tianjin 300457 (CN)**
- **WANG, Yufeng**
  **Tianjin 300457 (CN)**

(74) Representative: **Cabinet Chaillot**
**16/20, avenue de l'Agent Sarre**
**B.P. 74**
**92703 Colombes Cedex (FR)**

(56) References cited:
**WO-A1-2020/222985**
**CN-A- 109 447 973**
**CN-A- 112 200 773**
**CN-A- 113 284 146**
**US-B2- 9 700 213**

- **WANG YI ET AL: "Differentiation of polyps by clinical colonoscopy via integrated color information, image derivatives and machine learning", PROGRESS IN BIOMEDICAL OPTICS AND IMAGING, SPIE - INTERNATIONAL SOCIETY FOR OPTICAL ENGINEERING, BELLINGHAM, WA, US, vol. 10950, 13 March 2019 (2019-03-13), pages 109502Y - 109502Y, XP060119978, ISSN: 1605-7422, ISBN: 978-1-5106-0027-0, DOI: 10.1117/12.2512578**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- GARGI SRIVASTAVA ET AL: "Colon tumor localization using three input variants to Faster Region-based Convolutional Neural Network and lazy snapping", INTERNATIONAL JOURNAL OF IMAGING SYSTEMS AND TECHNOLOGY, WILEY AND SONS, NEW YORK, US, vol. 31, no. 4, 27 April 2021 (2021-04-27), pages 2123 - 2135, XP072580850, ISSN: 0899-9457, DOI: 10.1002/IMA.22581
- HANG ZHANG; CHONGRUO WU; ZHONGYUE ZHANG; YI ZHU; ZHI ZHANG; HAIBIN LIN; YUE SUN; TONG HE; JONAS MUELLER; R. MANMATHA; MU LI; ALEXA: "ResNeSt: Split-Attention Networks", ARXIV.ORG, CORNELL UNIVERSITY LIBRARY, 201 OLIN LIBRARY CORNELL UNIVERSITY ITHACA, NY 14853, 19 April 2020 (2020-04-19), 201 Olin Library Cornell University Ithaca, NY 14853 , XP081648111

## Description

### CROSS-REFERENCE

This application claims the priority of a Chinese patent application entitled "RECOGNITION METHOD AND APPARATUS FOR COLORECTAL POLYP IMAGE AND STORAGE MEDIUM" submitted to the China Patent Office on Friday, July 23, 2021, with application No. 2021108336398.

### TECHNICAL FIELD

This application relates to the field of medical technologies, and in particular to a recognition method and an apparatus for a colorectal polyp image and a storage medium.

### BACKGROUND

Colorectal polyps refer to protrusion lesions protruding in enteric cavities, and are one of common intestinal diseases, including adenomatous polyps and non-adenomatous polyps (such as hamartomatous polyps, metaplastic polyps and inflammatory polyps), where the adenomatous polyps belong to a kind of precancerous lesions. The incidence and the mortality of colorectal cancers in China are increasing year by year; the colorectal cancers have been in middle and advanced stage for many patients when being found; and the five-year survival rate of the patients is smaller than 50%. A colonoscope is a most intuitive and effective method of finding lesions, which may increase a finding rate of intestinal cancers in the early stage and thus lowers the mortality. Electronic staining endoscopy is an important advance in the digestive endoscopy field in recent years, for example, narrow band imaging (NBI), Fuji intelligent chromo endoscopy (FICE), I-scan and the like have been widely used for improving the detectability of colorectal adenomas. Researches show that in the aspect of identifying neoplastic and non-neoplastic colorectal polyp-like lesions, the electronic staining light technology has similar and high sensitivity, specificity and accuracy, and electron staining typing has a good application value in the aspect of diagnosing and treating colorectal lesions. However, determination on a type result still relies on experiences and visual inspection from doctors, and there are subjective differences.

Wang Yi, et al. have disclosed differentiation of polyps by clinical colonoscopy via integrated color information, image derivatives and machine learning in PROGRESS IN BIOMEDICAL OPTICS AND IMAGING SPIE·INTERNATIONAL SOCIETY FOR OPTICAL ENGINEERING,BELLINGHAM,WA,US, vol. 10950, 13 March 2019 (2019-03-13). The study integrates white light images (WLI), narrow band images (NBI), and machine learning to classify colorectal polyps (hyperplastic vs. adenomatous) using Haralick texture features from multi-color spaces (RGB, HSV, chromaticity) and derivative image levels (intensity, gradient, curvature). This approach reduces unnecessary resection of non-cancerous polyps, enhancing clinical decision-making in colorectal cancer screening through robust multi-modal data fusion.

GARGI SRIVASTAVA et al. have disclosed Colon tumor localization using three input variants to Faster Region-based Convolutional Neural Network and lazy snapping in INTERNATIONAL JOURNAL OF IMAGING SYSTEMS AND TECHNOLOGY, WILEY AND SONS, NEW YORK, US, vol.31,no.4,27 April 2021(2021-04-27),pages 2123-2135. Automated polyp localization in colon endoscopy images helps minimize human errors in localizing polyps. In our method, we use Faster Region-based Convolutional Neural Network (R-CNN) on Resnet 50 network to form a tight bounding box around the polyp. The bounding box is then used as input for the lazy snapping technique to determine polyps correctly. Three input variants-RGB images, histogram equalized images, and luminance images-are fed to the network. The output obtained from each variant is combined to form the final result. We have used the CVC-Clinical DB database, which has 612 images with 672 polyp instances for our study. Thirteen different combinations for obtaining the result are studied, and the best among them is identified. The result is evaluated for all combinations and against a state-of-the-art method for precision, recall, and F-measure. The proposed model achieves a precision of 80.51% and a recall value of 80.33%.

US9700213B2 disclosed System and method for automatic polyp detection using global geometric constraints and local intensity variation patterns. A system and methods for polyp detection using optical colonoscopy images are provided. In some aspects, the system includes an input configured to receive a series of optical images, and a processor configured to process the series of optical images with steps comprising of receiving an optical image from the input, constructing an edge map corresponding to the optical image, the edge map comprising a plurality of edge pixel, and generating a refined edge map by applying a classification scheme based on patterns of intensity variation to the plurality of edge pixels in the edge map. The processor may also process the series with steps of identifying polyp candidates using the refined edge map, computing probabilities that identified polyp candidates are polyps, and generating a report, using the computed probabilities, indicating detected polyps. The system also includes an output for displaying the report

SUMMARY

In order to solve the above technical problems or at least partially solve the above technical problems, this application provides a recognition method and an apparatus for a colorectal polyp image and a storage medium.
In one aspect, this application provides, according to claim 1, a recognition method for the colorectal polyp image, where the recognition method includes:

conducting color equalization processing and edge feature image fusion on a colorectum site image to obtain a gradient feature fusion image for the colorectum site image; and
calling a pre-constructed classification model for a type of colorectal polyps based on an attention splitting module ResNeSt Block, and recognizing the gradient feature fusion image for the colorectum site image.

Further, in order to predict or determine the type of the colorectal polyps, after the above steps, the recognition method may further includes: evaluating, according to a recognition result, the type of the colorectal polyps at a colorectum site.
Optionally, the recognition method for the colorectal polyp image further includes:

conducting color equalization processing and edge feature image fusion on a pre-acquired colorectal polyp sample image to obtain the gradient feature fusion image for the colorectal polyp sample image;
training, by using the gradient feature fusion image for the colorectal polyp sample image and a pre-constructed feature extraction network based on the ResNeSt Block, the classification model, and optimizing, according to a loss function, the classification model during training of the classification model; and
after training of the classification model, obtaining the classification model for the type of the colorectal polyps based on the ResNeSt Block.

Optionally, the training, by using the gradient feature fusion image for the colorectal polyp sample image and the pre-constructed feature extraction network based on the ResNeSt Block, the classification model includes:

training, in the constructed feature extraction network based on the ResNeSt Block, the gradient feature fusion image for the colorectal polyp sample image; and
activating, through a Mish function, an output of the ResNeSt Block.

Optionally, the Mish function is as follows:

$$f(x)=x*\tanh(\ln(1+e^{x}));$$

in the formula, x is each pixel value of an output feature image of the ResNeSt Block.
Optionally, training, in the pre-constructed feature extraction network based on the ResNeSt Block, the gradient feature fusion image for the colorectal polyp sample image includes:

splitting the gradient feature fusion image for the colorectal polyp sample image to obtain k group convolutions;
splitting each group convolution into r first feature images;
conducting 1*1 convolution operation and 3*3 convolution operation on the k * r first feature images first, then re-obtaining and fusing r second feature images in each group convolution, inputting a fused image into a Split Attention layer, and reinforcing features through an attention mechanism to obtain k results; and
continuously fusing the k results, then inputting a fused result into a 1*1 convolutional layer for convolution operation to obtain an output of the ResNeSt Block, where k and r are both hyper-parameters.

Optionally, the optimizing the classification model through the loss function during training of the classification model includes:
weighting, according to a number ratio of positive samples and negative samples of the colorectal polyp sample image, the positive samples; and calculating the loss value.
Optionally, the color equalization processing includes:

determining, according to a color mean of the image, an RGB channel weight value of the image; and
conducting, according to the RGB channel weight value of the image, RGB channel weighting on the image, where the

image is the colorectum site image or the colorectal polyp sample image.

Optionally, the edge feature image fusion includes:

scaling the image subjected to RGB channel weighting to obtain a scaled image;
conducting edge extraction on the scaled image to obtain an edge feature image; and
fusing the scaled image with the edge feature image to obtain the gradient feature fusion image.

In the second aspect, this application provides a result prediction apparatus for a type of colorectal polyps, where the result prediction apparatus includes a memory, a processor and computer programs storing on the memory and running on the processor; and
the computer programs, when being executed by the processor, implements the steps of the recognition method for the colorectal polyp image according to any one of the above items.

In the third aspect, this application provides a computer-readable storage medium, storing a result prediction program for a type of colorectal polyps thereon; and the result prediction program for the NICE type of the colorectal polyps, when being executed by the processor, implements the steps of the recognition method for the colorectal polyp image according to any one of the above items.

In the fourth aspect, this application provides a method of examining a subject with colonoscopy, where the method includes: predicting or determining, by using the recognition method for the colorectal polyp image according to any one of the above items or the result prediction apparatus for the type of the colorectal polyps according to any one of the above items, the type of the colorectal polyps of the subject under a colonoscope in real time.

In this specification, the type of the colorectal polyps refers to a morphological type such as non-neoplastic polyps, neoplastic polyps or glandular cancers.

A type standard may be a type standard under a traditional endoscope or a type standard under a magnification endoscopy-narrow band imaging (ME-NBI) endoscope. The type standard under the ME-NBI endoscope includes, for example, an NICE type standard, a Sano type standard, a Pit type standard, a Hiroshima type standard, a Showa type standard, a Jikei type standard, and a JNET type standard, preferably, the NICE type standard.

The colorectal polyp image may be an image acquired under the endoscope in real time and may further be a stored image.

Compared with the prior art, the technical solutions provided by the embodiments of this application have the following advantages:

In various embodiments of this application, by conducting color equalization processing and edge feature image fusion on the colorectum site image to construct a recognition sample, image features may be effectively unified and strengthened; and by extracting features with the ResNeSt Block, a result for the type of the colorectal polyps can be more accurately predicted, to assist a doctor to infer the pathological nature of the colorectal polyps.

## BRIEF DESCRIPTION OF DRAWINGS

The accompanying drawings herein are incorporated into the specification and constitute a part of the specification, show examples consistent with the present invention, and are used to explain the principle of the present invention together with the specification.

In order to describe the technical solutions in the embodiments of the present invention or the prior art more clearly, the following briefly introduces the accompanying drawings required for describing the embodiments or the prior art. Apparently, those of ordinary skill in the art may still derive other drawings from these drawings without any creative efforts.

FIG. 1 is a flowchart of a result prediction method for an NICE type of colorectal polyps provided by various embodiments of this application;
FIG. 2 is a schematic diagram of a feature extraction network based on a ResNeSt Block provided by various embodiment of the present application; and
FIG. 3 is a plot of an improved Mish function provided by various embodiment of the present application.

## DETAILED DESCRIPTION OF THE EMBODIMENTS

It should be understood that the specific embodiments described herein are only used for explaining the present invention, and are not used for defining the present invention.

In the subsequent description, suffixes, such as "module", "component" or "unit", for representing the elements are used for facilitating the description of the present invention merely without particular meanings self. Therefore,

"module", "component" and "unit" may be used in combination.

In this specification, the term "type of the colorectal polyps" refers to a morphological type such as non-neoplastic polyps, neoplastic polyps or glandular cancers. A type standard may be, for example, an NICE type standard, a Sano type standard, a Pit type standard, a Hiroshima type standard, a Showa type standard, a Jikei type standard and a JNET type standard.

Embodiment 1

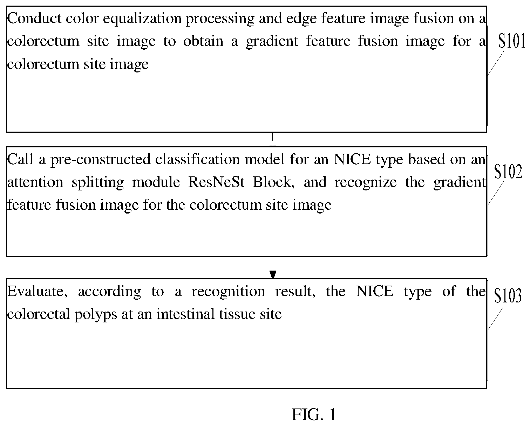

The embodiments of the present invention provide a result prediction method for an NICE type of colorectal polyps. As shown in FIG. 1, the result prediction method for the NICE type of the colorectal polyps includes:

S101, color equalization processing and edge feature image fusion are conducted on a colorectum site image to obtain a gradient feature fusion image for the colorectum site image; and
S102, a pre-constructed NICE type classification model based on an attention splitting module ResNeSt Block is called, and the gradient feature fusion image for the colorectum site image is recognized; and
S103, the NICE type of the colorectal polyps at a colorectum site is evaluated according to a recognition result.

In the embodiments of the present invention, by conducting color equalization processing and edge feature image fusion on the colorectum site image to construct a recognition sample, image features may be effectively unified and strengthened; and by extracting features with the ResNeSt Block to construct a computer-assistant NICE type system based on deep learning, a result for the NICE type of the colorectal polyps can be more accurately predicted, to assist a doctor to infer the pathological nature of the colorectal polyps.

In the specific implementation process, the colorectal polyp image is obtained in a mode of white light, NBI, FICE, BLI, LCI, I-SCAN or the like. The NICE type result includes type I, type II, type III and normal intestinal tracts.

In some embodiments, before the pre-constructed NICE type classification model based on the attention splitting module ResNeSt Block is called, the result prediction method includes:

conducting color equalization processing and edge feature image fusion on a pre-acquired colorectal polyp sample image to obtain the gradient feature fusion image for the colorectal polyp sample image;
the classification model is trained according to the gradient feature fusion image for the colorectal polyp sample image and a pre-constructed feature extraction network based on the ResNeSt Block, and the classification model is optimized according to a loss function during training of the classification model, where a loss function formula is as follows:

$$L = w(i) * (-t[i] + (\sum_{n} \exp(t[n])))$$

and after training of the classification model, the classification model for the NICE type based on the ResNeSt Block is obtained. In the formula, L represents a loss value; n represents the number of general classes; i represents a real class of current data; t represents a 1D tensor, obtained through the feature extraction network, for class possibility distribution; t[i] represents a predicted probability value from the classification model under the class i; w(i) represents a weighting coefficient for the predicted probability loss value under the class i; and $\sum_{n} \exp(t[n])$ represents that all numerical values of t are processed with exp and then summation.

In the embodiments of the present invention, by conducting color equalization processing and edge feature image fusion on the colorectum site image to construct a training sample, image features may be effectively unified and strengthened, so as to improve the prediction accuracy of the NICE type result of the colorectal polyps; and by optimizing the classification model according to the loss function, the training speed of the model is effectively increased.

In some embodiments, that the classification model is trained by using the gradient feature fusion image for the colorectal polyp sample image and the pre-constructed feature extraction network based on the ResNeSt Block includes:

the gradient feature fusion image for the colorectal polyp sample image is trained in the feature extraction network based on the ResNeSt Block; and

an output of the ResNeSt Block is added with the gradient feature fusion image for the colorectal polyp sample image, and a fused image is activated with the improved Mish function.

Optionally, the improved Mish function is as follows:

$$f(x)=x*\tanh(\ln(1+e^{x}));$$

in the formula, x is a pixel value of an output feature image of the ResNeSt Block.

The embodiments of the present invention effectively improve the feature fitting ability of the network based on the improved Mish function.

Optionally, training, in the pre-constructed feature extraction network based on the ResNeSt Block, the gradient feature fusion image for the colorectal polyp sample image includes:

splitting the gradient feature fusion image for the colorectal polyp sample image to obtain k group convolutions;
splitting each group convolution into r first feature images;
conducting 1*1 convolution operation and 3*3 convolution operation on the k * r first feature images first, then re-obtaining and fusing r second feature images in each group convolution, inputting a fused image into a Split Attention layer, and reinforcing features through an attention mechanism to obtain k results; and
continuously fusing the k results, then inputting a fused result into a 1*1 convolutional layer for convolution operation to obtain an output of the ResNeSt Block, where k and r are both hyper-parameters.

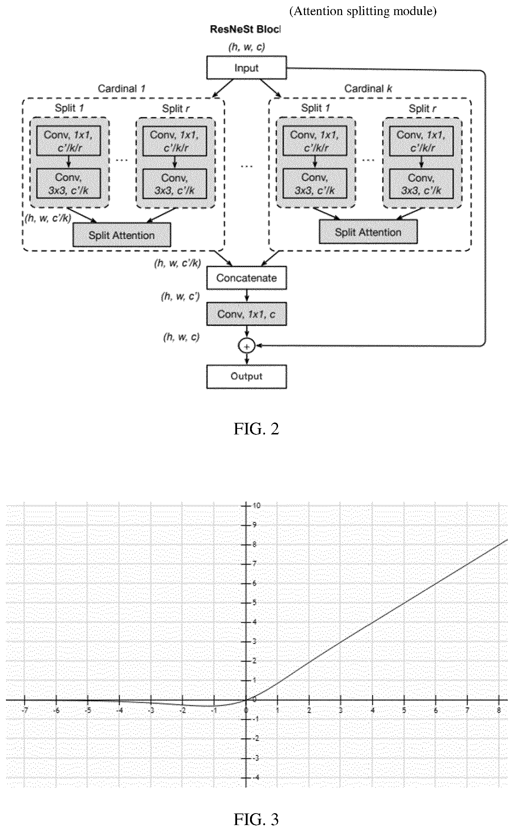

In detail, as shown in FIG. 2, a processing flow of the ResNeSt Block includes:

a) an input (an input of the gradient feature fusion image) is split to obtain Cardinal 1- Cardinal k, i.e. k group convolutions in total;
b) the image is split continuously in each group convolution to obtain Split 1 - Split r, i.e. r first feature images in total;
c) 1*1 convolution operation and then 3*3 convolution operation are conducted on the k * r first feature images; after the two convolution operations, r feature images in each group convolution are re-obtained and fused; a fused image is inputted into a Split Attention layer; and features are reinforced through an attention mechanism to obtain k results finally;
d) the k results are continuously fused, then a fused result is inputted into a 1*1 convolutional layer for convolution operation to obtain an output; and
e) the output of the ResNeSt Block is added with the input for activation with an activation function, to obtain a final feature image.

The activation function is selected a smoother Mish function, which improves the feature fitting ability of the network. A plot is shown in FIG. 3.

In the ResNeSt Block feature extraction network, 16 groups of ResNeSt Blocks are provided in total; and each group of Blocks is formed by three convolutional layers, so its network connecting structure is as follows:

Input → Conv*1 → ResNeSt Block (Conv * 2 + Attention + Conv*1) * 16 → fully connected layer.

A most effective portion in the ResNet is a residual module. In the embodiments of the present invention, an original residual structure is modified into the ResNeSt Block (attention splitting module); the feature extraction network may be formed by any number of the ResNeSt Blocks; however, the number of the Blocks is inversely proportional to a training/prediction speed and in direct proportion to the prediction accuracy; however, too many Blocks may cause the situations of the network of degradation in the fitting ability and weakening in the accuracy. In the embodiments of the present invention, 16 groups of ResNeSt Blocks are employed, so that the prediction accuracy is improved, and the training speed is also ensured.

Optionally, that the classification model is optimized through the loss function during training of the classification model includes:
weighting, according to a number ratio of positive samples and negative samples of the colorectal polyp sample image, the positive samples; and calculating the loss value.

Further, during training of the classification model, a data set on ImageNet is used for model pre-training, so as to ensure that initial parameters have excellent feature extraction ability and generalization ability. The initial learning rate of model training is 0.0001; and the learning rate is reduced in a mode of fixed-step attenuation. Based on this, the loss

function is used for, based on the number ratio of positive samples and negative samples at the same time, weighting the positive samples for calculating a loss value. Its specific formula is as follows:

$$L = w(i) * (-t[i] + (\sum_{n} \exp(t[n])))$$

(in the formula, L represents a loss value; n represents the number of general classes; i represents a real class of current data; t represents a 1D tensor, obtained through the feature extraction network, for class possibility distribution; t[i] represents a predicted probability value from the classification model under the class i; w(i) represents a weighting coefficient for the predicted probability value under the class i; and $\sum_{n} \exp(t[n])$ represents that all numerical values of t are processed with exp and then summation.)

An optimizer employs an AdamW optimizer algorithm, and has weight attenuation and L2 regularization functions, which may effectively increase the training speed and the model accuracy. The model yields an optimal solution after about 300 iterations.

In some embodiments, the color equalization processing includes:

determining, according to a color mean of the image, an RGB channel weight value of the image; and
conducting, according to the RGB channel weight value of the image, RGB channel weighting on the image, where the image is the colorectum site image or the colorectal polyp sample image.

The edge feature image fusion includes:

scaling the image subjected to RGB channel weighting to obtain a scaled image;
conducting edge extraction on the scaled image to obtain an edge feature image; and
fusing the scaled image with the edge feature image to obtain the gradient feature fusion image.

In the embodiments of the present invention, on the basis of original image sample data, a training sample is constructed in a mode of superimposing use of color equalization processing and gradient feature image fusion, and the image features may be effectively unified and reinforced in the above two modes.

Color equalization includes:

1. Values of R, G and B channels of all pixels of the image are added; and a sum is divided by the number of pixel points to obtain means of the R, G and B channels, i,e, v (r), v (g) and v (b).
2. A total mean K is solved, K=(v (r)+ v (g)+v (b))/3.
3. Weight values of various channels are calculated, i.e. Kb=K/v (b), Kg = K/v (g) and Kr=K/v (r).
4. Values of the R, G and B channels of the image are subjected to weighting multiplying with Kr, Kg and Kb respectively, for example, an addWeighted function of python-opencv is used.

Use of the color equalization processing may reduce a color difference in an intestinal tract due to lights and a patient self, more unify tones of the data set and improve the learning and detection efficiency of the feature extraction network.

Gradient feature image fusion includes:

1. The data set is uniformly scaled into m pixel *n pixel to obtain a scaled image H, for example, 430 pixel *368 pixel.
2. The scaled image is converted to a grayscale image, and the grayscale image is subjected to edge extraction with an edge extraction operator (for example, Scharr, Canny, Sobel, Laplace and the like) to obtain an edge feature image J.
3. The scaled image H and the edge feature image J are fused into 4-channel data, i.e. the gradient feature fusion image.

In various embodiments of the present invention, a computer-assistant NICE type system based on deep learning may be constructed, and a result for the NICE type of the colorectal polyps can be more accurately predicted, to assists a doctor to infer the pathological nature of the colorectal polyps.

Embodiment 2:

The embodiments of the present invention provide a result prediction apparatus for an NICE type of colorectal polyps, where the result prediction apparatus includes a memory, a processor and computer programs storing on the memory and running on the processor; and

the computer programs, when being executed by the processor, implements the steps of the result prediction method for the NICE type of the colorectal polyps according to any one of the above items in embodiment 1.

The result prediction apparatus for the NICE type of the colorectal polyps may be a endoscopy device; and the memory may be a cloud memory.

Embodiment 3:

The embodiments of the present invention provide a computer-readable storage medium, storing therein a result prediction program for an NICE type of colorectal polyps; and the result prediction program for the NICE type of the colorectal polyps, when being executed by the processor, implements the steps of the result prediction method for the NICE type of the colorectal polyps according to any one of the above items in embodiment 1.

Example 4:

The embodiments of the present invention provide a method of examining a subject with colonoscopy, where the method includes: the NICE type of the colorectal polyps of the subject under a colonoscope is predicted or determined by using the result prediction method for the NICE type of the colorectal polyps in embodiment 1 and the result prediction apparatus for the NICE type of the colorectal polyps in embodiment 2 in real time.

Specific implementations of embodiment 2, embodiment 3 and embodiment 4 may refer to embodiment 1 and have the corresponding technical effects.

It should be noted that the terms "include", "comprise", or any variants thereof herein are intended to cover a non-exclusive inclusion, so that a process, method, article, or apparatus that includes a series of elements not only includes those elements, but also includes other elements not listed explicitly, or includes inherent elements of the process, method, article, or apparatus. In the absence of more limitations, an element defined by "include a..." does not exclude other same elements existing in the process, method, article, or apparatus including the element.

The serial numbers of the embodiments of the invention are only for description, and do not represent the advantages and disadvantages of the embodiments.

From the description of the above embodiments, it will be apparent to those skilled in the art that the methods of the above examples may be implemented by means of software plus a necessary general-purpose hardware platform, and of course may also be implemented by means of hardware, but in many cases the former is a better embodiment. On the basis of the understanding, the technical solution of the present invention may be embodied in a form of a software product in essence or a part contributing to the prior art, and the computer software product is stored in the storage medium (for example, a read only memory (ROM)/random access memory (RAM), a magnetic disk and an optical disk) as above, and includes several instructions for enabling a terminal (like a mobile phone, a computer, a server, an air conditioner, or a network device) to execute the method of each embodiment of the present invention.

The embodiments of the present invention are described above in combination with the accompanying drawings. However, the present invention is not limited to the above specific implementations; and the above specific implementations are merely meant to be illustrative and not limiting. The invention is defined by the appended claims.

## Claims

**1.** A computer-implemented recognition method for a colorectal polyp image, the recognition method comprising:

(S101) conducting color equalization processing and edge feature image fusion on a colorectum site image to obtain a gradient feature fusion image for the colorectum site image; and

(S102) calling a pre-constructed classification model for a type of colorectal polyps, whose input is the gradient feature fusion image, based on an attention splitting module ResNeSt Block, and recognizing the gradient feature fusion image for the colorectum site image;

wherein the edge feature image fusion comprises:

scaling the image subjected to color equalization processing to obtain a scaled image;

conducting edge extraction on a greyscale image to obtain an edge feature image, wherein the greyscale

image is obtained by converting the scaled image to a greyscale image; and
fusing the scaled image in RGB space with the edge feature image into a 4-channel data, which forms the gradient feature fusion image;
wherein the color equalization processing comprises:

determining, according to means of the R, G and B channels and a total color mean, weight values of R, G , B channels; and
conducting, according to the RGB channel weight values, weighting on the values of the R, G and B channels of the image.

**2.** The recognition method for the colorectal polyp image according to claim 1, the recognition method further comprising:

conducting color equalization processing and edge feature image fusion on a pre-acquired colorectal polyp sample image to obtain the gradient feature fusion image for the colorectal polyp sample image;
training, by using the gradient feature fusion image for the colorectal polyp sample image and a pre-constructed feature extraction network based on the ResNeSt Block, the classification model, and optimizing the classification model through a loss function during training of the classification model, a loss function formula being as follows:

$$L = w(i) * (-t[i] + (\sum_{n} \exp(t[n])))$$

and after training of the classification model, obtaining the classification model for the type of the colorectal polyps based on the ResNeSt Block; in the formula, *L* represents a loss value; *n* represents the number of general classes; *i* represents a real class of current data; t represents a 1D tensor, for class possibility distribution, obtained through the feature extraction network,; *t[i]* represents a predicted probability value from the classification model under the class *i; w(i)* represents a weighting coefficient for the predicted loss value under the class *i*; and $\sum_{n} \exp(t[n])$ represents that all numerical values of t are processed with exp and then summation;
wherein the training of the classification model comprises: training, in the pre-constructed feature extraction network based on the ResNeSt Block, the gradient feature fusion image for the colorectal polyp sample image; and
activating, through a Mish function, an output of the ResNeSt Block.

**3.** The recognition method for the colorectal polyp image according to claim 2, wherein the Mish function is as follows:

$$f(x)=x*\tanh(\ln(1+e^{x}));$$

in the formula, x is a pixel value of an output feature image of the ResNeSt Block.

**4.** The recognition method for the colorectal polyp image according to claim 2, wherein the training, in the pre-constructed feature extraction network based on the ResNeSt Block, the gradient feature fusion image for the colorectal polyp sample image comprises::

splitting the gradient feature fusion image for the colorectal polyp sample image to obtain k group convolutions;
splitting each group convolution into r first feature images;
conducting 1*1 convolution operation and 3*3 convolution operation on the k * r first feature images first, then re-obtaining and fusing r second feature images in each group convolution, inputting a fused image into a Split Attention layer, and reinforcing features through an attention mechanism to obtain k results; and
continuously fusing the k results, then inputting a fused result into a 1*1 convolutional layer for convolution operation to obtain an output of the ResNeSt Block, wherein k and r are both hyper-parameters.

5. The recognition method for the colorectal polyp image according to claim 2, wherein the optimizing the classification model through the loss function during training of the classification model comprises:
weighting, according to a number ratio of positive samples and negative samples of the colorectal polyp sample image, the positive samples; and calculating the loss value.

6. The recognition method for the colorectal polyp image according to claim 1, wherein a standard for the type of the colorectal polyps is an NICE type standard, a Sano type standard, a Pit type standard, Hiroshima type standard, a Showa type standard, a Jikei type standard, or a JNET type standard.

7. The recognition method for the colorectal polyp image according to claim 6, wherein the standard for the type of the colorectal polyps is the NICE type standard.

8. A result prediction apparatus for a type of colorectal polyps, comprising a memory, a processor and computer programs storing on the memory and running on the processor,
the computer programs, when being executed by the processor, implementing the steps of the recognition method for the colorectal polyp image according to any one of claim 1 to 7.

9. A computer-readable storage medium storing therein a result prediction program for a type of colorectal polyps, the result prediction program for the type of the colorectal polyps, when being executed by the processor, implementing the steps of the recognition method for the colorectal polyp image according to any one of claim 1 to 7.

10. A method of examining a subject with colonoscopy, the method comprising: predicting or determining, by using the recognition method for the colorectal polyp image according to any one of claim 1 to 7, the type of the colorectal polyps of the subject under a colonoscope in real time.

## Patentansprüche

1. - Computerimplementiertes Erkennungsverfahren für ein Bild eines kolorektalen Polypen, wobei das Erkennungsverfahren umfasst:

(S101) Durchführen einer Farbausgleichsverarbeitung und einer Fusion von Kantenmerkmalbildern auf einem Bild einer kolorektalen Stelle, um ein Fusionsbild von Gradientenmerkmalen für das genannte Bild der kolorektalen Stelle zu erhalten; und
(S102) Aufrufen eines vorgefertigten Klassifikationsmodells für einen Typ von kolorektalen Polypen, dessen Eingabe das Fusionsbild der Gradientenmerkmalen ist, auf der Grundlage eines ResNeSt-Blocks eines Aufmerksamkeitsverteilungsmoduls, und Erkennen des Fusionsbildes der Gradientenmerkmalen für das Bild einer kolorektalen Stelle;
wobei die Fusion von Kantenmerkmalsbildern umfasst:

das Skalieren des Bildes, das einer Farbausgleichsverarbeitung unterzogen wurde, um ein skaliertes Bild zu erhalten;
die Durchführung einer Kantenextraktion an einem Graustufenbild, um ein Kantenmerkmalsbild zu erhalten, wobei das Graustufenbild durch Umwandlung des skalierten Bildes in ein Graustufenbild erhalten wird; und
das Fusionieren des skalierten Bildes im RGB-Farbraum mit dem Kantenmerkmalsbild zu 4-Kanal-Daten, wodurch das Fusionsbild der Gradientenmerkmale gebildet wird;
wobei die Farbausgleichsverarbeitung umfasst:

die Bestimmung von Gewichtswerten für die R-, G- und B-Kanäle unter Verwendung der R-, G- und B-Kanäle und eines Gesamtfarbmittelwerts; und
die Durchführung einer Gewichtung der Werte der Kanäle R, V und B des Bildes in Abhängigkeit von den Gewichtswerten der RGB-Kanäle.

2. - Verfahren zur Erkennung eines Bildes eines kolorektalen Polypen gemäß Anspruch 1, wobei das Erkennungsverfahren ferner umfasst:

die Durchführung einer Farbausgleichsverarbeitung und einer Fusion von Kantenmerkmalsbildern auf einem zuvor erfassten kolorektalen Polypen-Beispielbild, um das Fusionsbild der Gradientenmerkmale für das kolo-

rektale Polypen-Beispielbild zu erhalte;
das Training des Klassifikationsmodells unter Verwendung des Fusionsbildes der Gradientenmerkmale für das kolorektale Polypen-Beispielbild und eines auf dem ResNeSt-Block basierenden, vorgefertigten Merkmalsextraktionsnetzwerks sowie das Optimieren des Klassifikationsmodells mittels einer Verlustfunktion während des Trainings des Klassifikationsmodells, wobei die Formel der Verlustfunktion wie folgt lautet:

$$L = w(i) * (-t[i] + (\sum_{n} \exp(t[n])))$$

und nach dem Training des Klassifikationsmodells die Ermittlung des Klassifikationsmodells für den Typ der kolorektalen Polypen auf der Grundlage des ResNeSt-Blocks; in der Formel steht *L* für einen Verlustwert; *n* steht für die Anzahl der allgemeinen Klassen; *i* steht für eine tatsächliche Klasse der aktuellen Daten; t steht für einen 1D-Tensor für die Verteilung der Klassenwahrscheinlichkeiten, der über das Merkmalsextraktionsnetzwerk ermittelt wurde; *t[i]* einen vom Klassifikationsmodell für die Klasse *i* vorhergesagten Wahrscheinlichkeitswert darstellt; *w(i)* einen Gewichtungskoeffizienten für den für die Klasse *i* vorhergesagten Verlustwert darstellt; und

$$\sum_{n} \exp(t[n])$$

die Tatsache darstellt, dass alle numerischen Werte von t durch eine Exponentialfunktion verarbeitet und anschließend summiert werden;
wobei das Training des Klassifikationsmodells umfasst:

das Training des Fusionbildes der Gradientenmerkmale für das kolorektale Polypen-Beispielbild in dem auf dem ResNeSt-Block basierenden, vorgefertigten Merkmalsextraktionsnetzwerks; und
die Aktivierung einer Ausgabe des ResNeSt-Blocks mittels einer Mish-Funktion.

**3.** - Verfahren zur Erkennung eines Bildes eines kolorektalen Polypen gemäß Anspruch 2, wobei die Mish-Funktion wie folgt lautet:

$$f(x) = x*\tanh(\ln(1+e^{x}));$$

wobei in der Formel x ein Pixelwert eines Ausgabemerkmalsbildes des ResNeSt-Blocks ist.

**4.** - Verfahren zur Erkennung eines Bildes eines kolorektalen Polypen gemäß Anspruch 2, wobei das Training des des Fusionbildes der Gradientenmerkmale für das kolorektale Polypen-Beispielbild in dem auf dem ResNeSt-Block basierenden, vorgefertigten Merkmalsextraktionsnetzwerk umfasst:

das Aufteilen des Fusionsbildes der Gradientenmerkmalen für das kolorektale Polypen-Beispielbild, um k Gruppenkonvolutionen zu erhalten;
das Aufteilen jeder Gruppenfaltung in r erste Merkmalsbilder;
die Durchführung einer 1×1-Faltungsoperation und einer 3×3-Faltungsoperation an den k × r ersten Merkmalsbildern, gefolgt von der Wiedergewinnung und Fusion von r zweiten Merkmalsbildern in jeder Gruppenfaltung, die Eingabe eines fusionierten Bildes in eine Split-Attention-Schicht und die Verstärkung der Merkmale mittels eines Aufmerksamkeitsmechanismus, um k Ergebnisse zu erhalten; und
die fortlaufende Fusion der k Ergebnisse, gefolgt von der Eingabe eines fusionierten Ergebnisses in eine 1*1-Faltungsschicht für eine Faltungsoperation, um eine Ausgabe des ResNeSt-Blocks zu erhalten, wobei k und r beide Hyperparameter sind.

**5.** - Verfahren zur Erkennung eines Bildes eines kolorektalen Polypen gemäß Anspruch 2, wobei die Optimierung des Klassifikationsmodells mittels der Verlustfunktion während des Trainings des Klassifikationsmodells umfasst:

die Gewichtung der positiven Proben in Abhängigkeit von einem zahlenmäßigen Verhältnis zwischen den positiven und den negativen Proben des kolorektalen Polypen-Beispielbildes; und
die Berechnung des Verlustwerts.

6. - Verfahren zur Erkennung eines Bildes eines kolorektalen Polypen gemäß Anspruch 1, wobei ein Standard für den Typ kolorektaler Polypen ein NICE-Standard, ein Sano-Standard, ein Pit-Standard, ein Hiroshima-Standard, ein Showa-Standard, ein Jikei-Standard oder ein JNET-Standard ist.

7. - Verfahren zur Erkennung eines Bildes eines kolorektalen Polypen gemäß Anspruch 6, wobei der Standard für den Typ kolorektaler Polypen der NICE-Standard ist.

8. - Vorrichtung zur Vorhersage von Ergebnissen für einen Typ von kolorektalen Polypen, umfassend einen Speicher, einen Prozessor und Computerprogramme, die im Speicher gespeichert sind und auf dem Prozessor ausgeführt werden,
wobei die Computerprogramme, wenn sie vom Prozessor ausgeführt werden, die Schritte des Verfahrens zur Erkennung eines kolorektalen Polypenbildes gemäß einem der Ansprüche 1 bis 7 ausführen.

9. - Computerlesbares Speichermedium, auf dem ein Programm zur Vorhersage von Ergebnissen für eine Art von kolorektalen Polypen gespeichert ist, wobei das Programm zur Vorhersage von Ergebnissen für die Art von kolorektalen Polypen, wenn es vom Prozessor ausgeführt wird, die Schritte des Verfahrens zur Bilderkennung von kolorektalen Polypen gemäß einem der Ansprüche 1 bis 7 ausführt.

10. - Verfahren zur Untersuchung einer Person mittels Koloskopie, wobei das Verfahren umfasst:
das Vorhersagen oder Bestimmen des Typs der kolorektalen Polypen der mittels Koloskopie untersuchten Person in Echtzeit unter Verwendung des Bilderkennungsverfahrens für kolorektale Polypen gemäß einem der Ansprüche 1 bis 7.

## Revendications

1. - Procédé de reconnaissance mis en œuvre par ordinateur pour une image de polype colorectal, le procédé de reconnaissance comprenant :

   (S101) la réalisation d'un traitement d'égalisation des couleurs et d'une fusion d'images de caractéristiques de bords sur une image d'un site colorectal afin d'obtenir une image de fusion de caractéristiques de gradient pour ladite image de site colorectal ; et
   (S102) l'appel d'un modèle de classification pré-construit pour un type de polypes colorectaux, dont l'entrée est l'image de fusion des caractéristiques de gradient, sur la base d'un bloc ResNeSt de module de répartition de l'attention, et la reconnaissance de l'image de fusion des caractéristiques de gradient pour l'image de site colorectal ;
   dans lequel la fusion d'images de caractéristiques de bords comprend :

      la mise à l'échelle de l'image soumise au traitement d'égalisation des couleurs afin d'obtenir une image mise à l'échelle ;
      la réalisation d'une extraction des bords sur une image en niveaux de gris pour obtenir une image de caractéristiques de bords, l'image en niveaux de gris étant obtenue en convertissant l'image mise à l'échelle en une image en niveaux de gris ; et
      la fusion de l'image mise à l'échelle dans l'espace RVB avec l'image de caractéristiques de bords en données à 4 canaux, ce qui forme l'image de fusion de caractéristiques de gradient ;
      dans lequel le traitement d'égalisation des couleurs comprend :

         la détermination, à l'aide des canaux R, V et B et d'une moyenne de couleur totale, de valeurs de pondération des canaux R, V et B ; et
         la réalisation, en fonction des valeurs de pondération des canaux RVB, d'une pondération sur les valeurs des canaux R, V et B de l'image.

2. - Procédé de reconnaissance d'une image de polype colorectal selon la revendication 1, le procédé de reconnaissance comprenant en outre :

   la réalisation d'un traitement d'égalisation des couleurs et d'une fusion d'images de caractéristiques de bords sur une image d'échantillon de polype colorectal pré-acquise afin d'obtenir l'image de fusion de caractéristiques de gradient pour l'image d'échantillon de polype colorectal ;

l'entraînement, à l'aide de l'image de fusion de caractéristiques de gradient pour l'image d'échantillon de polype colorectal et d'un réseau d'extraction de caractéristiques pré-construit basé sur le bloc ResNeSt, du modèle de classification, et l'optimisation du modèle de classification par le biais d'une fonction de perte pendant l'entraînement du modèle de classification, la formule de la fonction de perte étant la suivante :

$$L = w(i) * (-t[i] + (\sum_{n} \exp\,(t[n])))$$

et, après l'entraînement du modèle de classification, l'obtention du modèle de classification pour le type de polypes colorectaux sur la base du bloc ResNeSt ; dans la formule, *L* représente une valeur de perte ; *n* représente le nombre de classes générales ; *i* représente une classe réelle des données actuelles ; t représente un tenseur 1D, pour la distribution des possibilités de classe, obtenu via le réseau d'extraction de caractéristiques ; *t[i]* représente une valeur de probabilité prédite par le modèle de classification pour la classe *i ; w(i)* représente un coefficient de pondération pour la valeur de perte prédite pour la classe *i* ; et $\sum_{n} \exp\,(t[n])$ représente le fait que toutes les valeurs numériques de t sont traitées par une fonction exponentielle puis sommées ;
dans lequel l'entraînement du modèle de classification comprend :

l'entraînement, dans le réseau d'extraction de caractéristiques pré-construit basé sur le bloc ResNeSt, de l'image de fusion de caractéristiques de gradient pour l'image d'échantillon de polype colorectal ; et
l'activation, par le biais d'une fonction Mish, d'une sortie du bloc ResNeSt.

**3.** - Procédé de reconnaissance d'une image de polype colorectal selon la revendication 2, dans lequel la fonction Mish est la suivante :

$$f(x) = x*\tanh(\ln(1+e^{x})) \;;$$

dans la formule, x est une valeur de pixel d'une image de caractéristique de sortie du bloc ResNeSt.

**4.** - Procédé de reconnaissance d'une image de polype colorectal selon la revendication 2, dans lequel l'entraînement, au sein du réseau d'extraction de caractéristiques pré-construit basé sur le bloc ResNeSt, de l'image de fusion des caractéristiques de gradient pour l'image d'échantillon de polype colorectal comprend :

la division de l'image de fusion de caractéristiques de gradient pour l'image d'échantillon de polype colorectal afin d'obtenir k convolutions de groupe ;
la division de chaque convolution de groupe en r premières images de caractéristiques ;
la réalisation en premier lieu d'une opération de convolution 1*1 et d'une opération de convolution 3*3 sur les k * r premières images de caractéristiques, puis la réobtention et la fusion de r deuxièmes images de caractéristiques dans chaque convolution de groupe, l'entrée d'une image fusionnée dans une couche Split Attention, et le renforcement des caractéristiques par le biais d'un mécanisme d'attention pour obtenir k résultats ; et
la fusion en continu des k résultats, puis l'entrée d'un résultat fusionné dans une couche convolutive 1*1 pour une opération de convolution afin d'obtenir une sortie du bloc ResNeSt, où k et r sont tous deux des hyperparamètres.

**5.** - Procédé de reconnaissance d'une image de polype colorectal selon la revendication 2, dans lequel l'optimisation du modèle de classification par le biais de la fonction de perte pendant l'entraînement du modèle de classification comprend :

la pondération, en fonction d'un rapport numérique entre les échantillons positifs et les échantillons négatifs de l'image d'échantillon de polype colorectal, des échantillons positifs ; et
le calcul de la valeur de perte.

**6.** - Procédé de reconnaissance d'une image de polype colorectal selon la revendication 1, dans lequel une norme pour le type de polypes colorectaux est une norme de type NICE, une norme de type Sano, une norme de type Pit, une norme de type Hiroshima, une norme de type Showa, une norme de type Jikei ou une norme de type JNET.

**7.** - Procédé de reconnaissance d'une image de polype colorectal selon la revendication 6, dans lequel la norme relative au type de polypes colorectaux est la norme de type NICE.

**8.** - Appareil de prédiction de résultats pour un type de polypes colorectaux, comprenant une mémoire, un processeur et des programmes informatiques stockés dans la mémoire et s'exécutant sur le processeur,
les programmes informatiques, lorsqu'ils sont exécutés par le processeur, mettant en œuvre les étapes du procédé de reconnaissance d'image de polype colorectal selon l'une quelconque des revendications 1 à 7.

**9.** - Support de stockage lisible par ordinateur stockant dans celui-ci un programme de prédiction de résultats pour un type de polypes colorectaux, le programme de prédiction de résultats pour le type de polypes colorectaux, lorsqu'il est exécuté par le processeur, mettant en œuvre les étapes du procédé de reconnaissance d'image de polype colorectal selon l'une quelconque des revendications 1 à 7.

**10.** - Procédé d'examen d'un sujet par coloscopie, le procédé comprenant :
la prédiction ou la détermination, à l'aide du procédé de reconnaissance d'image de polypes colorectaux selon l'une quelconque des revendications 1 à 7, du type de polypes colorectaux du sujet examiné par coloscopie en temps réel.

Conduct color equalization processing and edge feature image fusion on a colorectum site image to obtain a gradient feature fusion image for a colorectum site image

S101

Call a pre-constructed classification model for an NICE type based on an attention splitting module ResNeSt Block, and recognize the gradient feature fusion image for the colorectum site image

S102

Evaluate, according to a recognition result, the NICE type of the colorectal polyps at an intestinal tissue site

S103

FIG. 1

(Attention splitting module)
ResNeSt Block
(h, w, c)
Input
Cardinal 1
Cardinal k
Split 1
Split r
Conv, 1x1, c'/k/r
Conv, 3x3, c'/k
(h, w, c'/k)
Split Attention
(h, w, c'/k)
Concatenate
(h, w, c')
Conv, 1x1, c
(h, w, c)
Output

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021108336398 A
- US 9700213 B2


### Non-patent literature cited in the description


- differentiation of polyps by clinical colonoscopy via integrated color information, image derivatives and machine learning. **WANG YI et al.** PROGRESS IN BIOMEDICAL OPTICS AND IMAGING SPIE·INTERNATIONAL SOCIETY FOR OPTICAL ENGINEERING. BELLINGHAM, 13 March 2019, vol. 10950
- Colon tumor localization using three input variants to Faster Region-based Convolutional Neural Network and lazy snapping. **GARGI SRIVASTAVA et al.** INTERNATIONAL JOURNAL OF IMAGING SYSTEMS AND TECHNOLOGY. WILEY AND SONS, 27 April 2021, vol. 31, 2123-2135